# EUROPEAN PATENT APPLICATION

(11) **EP 2 168 656 A1**
(43) Date of publication of application: **31.03.2010**
(21) Application number: 08017218.2
(22) Date of filing: 30.09.2008
(51) Int. Cl.: B01D 53/04

(54) **Recovery and purification process for organic molecules**

(71) Applicant: Süd-Chemie AG, 80333 München (DE)
(72) Inventor: The designation of the inventor has not yet been filed
(74) Representative: HOFFMANN EITLE

(57) **Abstract**

The invention concerns a process for the recovery of an organic molecule from the overhead vapor phase of aqueous media by adsorbing onto an adsorbent, wherein no additional thermal energy for said vaporization is provided, and wherein the organic molecule is recovered afterwards by desorbing from the adsorber.

## Description

### FIELD OF INVENTION

The invention is directed to an energy-efficient process for the recovery and purification of at least one organic molecule from an aqueous medium using a solid adsorbent. The overhead vapor phase of the aqueous medium is exposed to the adsorbent to adsorb and concentrate the organic molecule. In a second step the captured organic molecule is desorbed from the adsorbent. The process of the invention can save significant energy compared to conventional concentration and purification processes.

The invention is directed to an energy-efficient process for recovery, concentration and/or purification of organic molecules by a vapor phase adsorption from an aqueous medium. The process comprises an adsorbing step in which the organic molecule is adsorbed from the vapor phase of an aqueous medium at ambient temperatures utilizing no additional thermal energy. The organic molecule is bound onto the adsorber at a higher concentration compared to the concentration in the aqueous medium and the adsorber is selected to have a smaller thermal capacity compared to water. Thereby, the energy needed to recover the organic molecule is significantly reduced compared to conventional recovery processes, e.g. by adsorption in the liquid phase of an aqueous medium.

As an alternative to the preparation of petroleum-based organic molecules, the energy-saving recovery of organic molecules from fermentation processes is especially important to supply world chemical and fuel needs.

### TECHNICAL BACKGROUND AND PRIOR ART

Fermentation processes for the production of organic molecules have received considerable attention in recent years as a method to produce commodity chemicals and fuels from biomass. It is expected that in the near future a significant amount of organic molecules will be derived from fermentation processes.

In a conventional fermentation process, microorganisms convert renewable raw materials like sugars to ethers, alcohols, ketons, aldehyds, amines, acids or more complex molecules containing two or more such functionalities, e.g. diols or hydroxy carboxylic acids. For many processes high concentrations of substrates or products can inhibit the growth of microorganisms. This results in lower product titers and hence in the requirement to purify the product from diluted aqueous media. This typically requires high amounts of energy, in particular when by-products of the fermentation process need to be separated additionally.

Organic molecules are conventionally recovered from diluted aqueous solutions such as fermentation media by distillation processes which are energy-intensive. Significant heat energy is required since the major component of fermentation media is water, which is heated to recover the minor component, the organic molecule. Since cost of producing organic molecules from renewable biomass depends not only on the fermentation, but heavily on the recovery and purification of products produced by the fermentation process, high energy consumption is offsetting the energy balance of such products.

There have been many attempts to develop energy efficient processes for recovering organic molecules from fermentations. It has been previously demonstrated that organic molecules can be concentrated and purified from aqueous media by rectification, liquid adsorption, membrane processes, gas stripping, 2-phase systems and the like.

Adsorption is a process applied for the purification of liquids, gases or vapors, wherein molecules are removed by adsorption to suitable adsorbents. In this process molecules are retained from the liquids, gases or vapors on the surface of solids by means of interactions of chemical or physical nature, forming layers on these surfaces. Thus, certain molecules are depleted from these liquids, gases or vapors.

Organic molecules are recovered effectively by a liquid phase adsorption process utilizing adsorbents such as activated carbon, ion exchange resins and molecular sieves. These adsorbents can selectively adsorb either water from the aqueous organic molecule or the organic molecule from water. The main drawback of liquid phase adsorption processes are the poor recovery of organic molecules due to the entrapment of water, cell debris and other solids in-between the particles, the interaction with ionic substances, the possibility of mechanical problems and as a result in a reduced capacity for the target organic molecule due to limited accessibility of the inner surface of the adsorbents.

A particularly relevant organic molecule is butanol (referred also as 1-butanol, n-butanol or Butan-1-ol). Butanol is an important fuel and chemical precursor that can be produced by fermentation from renewable biomass by using microorganisms. A microorganism capable of producing butanol in an ABE fermentation process may belong to the genus Clostridia, such as Clostridium acetobutylicum or Clostridium beijerinckii. Processes for ABE fermentation are known in the literature and may be carried out as described by Monot, F. et. Al., 1984, Appl. Microbiology and Biotechnology 19:422-425.

One of the reasons that the fermentative production of butanol has not become commercially successful is that the concentration of butanol in the fermentation is low, typically in the range of below 20 g/I. Main reason is the toxicity of butanol to the microorganism. Due to the low butanol yield, the recovery costs of butanol by distillation or rectification are very high.

To make butanol fermentation economically feasible, several alternative product recovery techniques like pervaporation, gas stripping, liquid-liquid extraction, adsorption, reverse osmosis, aqueous two phase separation and steam stripping distillation have been investigated (Qureshi, N., et al., 2005, Bioprocess and Biosystems Engineering, 27(4):215-222).

Gas stripping allows for the selective removal of volatile organic molecules from a aqueous phase by passing a flow of stripping gas through the aqueous phase., forming enriched stripping gas (U.S. Pat. No. 4,703,007, U.S. Pat. No. 4,327,184) and removing the organic molecules from the enriched stripping gas by condensation. The main drawback of gas stripping is the lack of selectivity since all volatile molecules in the aqueous medium including water are removed and condensate together. Furthermore the energy demand for cooling the stripping gas to condensate the volatiles in the gas stream is significant.

### PROBLEM TO BE SOLVED

To provide a method for the recovery of organic molecules out of aqueous media in which the energy demand for recovery is significantly smaller compared to conventional methods.

### DESCRIPTION OF THE INVENTION

The problem has been solved by providing a method for the recovery of organic molecules out of aqueous media in which the organic molecule is adsorbed to an adsorbent from the overhead vapor phase of an aqueous phase, and in which the adsorbent is capable of adsorbing the organic molecule.

In order to be recovered and purified by the method of the invention the organic molecule has to have a certain vapor pressure at process temperatures, in particular at 15-37°C. Typical examples for these organic molecules are low molecular weight ethers, alcohols, ketons, aldehyds or acids.

According to a preferred aspect of the method of the invention, essentially no liquid phase is present in the vapor phase of the adsorption step. Moreover, the adsorption step is preferably conducted at ambient temperatures, thereby omitting the necessity of providing additional thermal energy for the adsorption step. Thus, the adsorption step is preferably conducted in the range from 15-37°C.

According to a preferred embodiment of the invention, the adsorbent is capable to adsorb 0,1 to less than 5 times, preferably 0,5 to 3,5 times and most preferably 1 to 2 times more of the organic molecules than water under the given process conditions. According to a preferred embodiment, the afore-mentioned value is measured at 20°C and 1 bar.

The main drawback of liquid phase adsorption processes is prevented in the method of the invention by adsorbing from the vapor phase because most interfering molecules, cell debris and other solids are not volatile and thus cannot interfere with the adsorption of the volatile organic molecule in the vapor phase.

According to the method of the invention, the organic molecules are adsorbed from the overhead vapor phase of the aqueous medium. Alternatively, the transport of the organic molecules into the vapor phase is enhanced by gas generated during the fermentation. In addition, the transfer can be enhanced by gas stripping. Examples of stripping gases for stripping low molecular weight ethers, alcohols, ketons, aldehyds, amines and acids are known from literature. Typical examples include: carbon dioxide, helium, hydrogen, nitrogen, air, or a mixture of these gases. The stripping gases may be a mixture of gases in any desired ratio. Typically an external stripping apparatus or other gas stripping configuration is used to enhance the stripping efficiency and reduce operation time.

The adsorbed organic molecule is removed from the adsorber by heating the adsorbent and collected by cooling the vapor containing the organic molecule coming off the adsorber to condense the organic molecule. Compared to a gas stripping process the concentration of the organic molecule is with this method significantly higher due to the selectivity of the adsorber for the organic molecule. The application of vacuum further enhances the desorption by allowing lower processing temperatures. The low pressures and temperatures are energy efficient and serve to minimize heat degradation producing a non-heat sensitized product.

This method has many potential applications in the reduction of energy demand and the concentration of volatiles in the beverage, fuel, and industrial alcohol industries, as well as in chemical applications for removing volatiles from heat sensitive feed substrates which require low temperatures and a short residence time to prevent degradation of the product.

The aqueous medium in the process according to the invention may be any suitable medium comprising an organic molecule. The organic molecule in the aqueous medium may be the result of a chemical reaction, or it may have been derived from fossil fuels and added to an aqueous medium, or it may have been produced by fermentation. The aqueous medium may be a fermentation medium in which the organic molecule has been produced by microbial fermentation. Alternatively, a microorganism capable of producing an organic molecule may have been made capable of producing the organic molecule by recombinant DNA techniques.

The adsorption of an organic molecule from a fermentation medium in the process according to the present invention may be carried out after the production of an organic molecule has been completed (ex situ). Alternatively, the adsorption of an organic molecule may be carried out when the product is being produced (in situ). The process for the recovery of an organic molecule from a fermentation medium may also be a combination of ex situ and in situ adsorption.

In another aspect the present invention relates to the use of organic molecule recovered by a process according to the present invention as a chemical agent. The organic molecule may be used as raw material for the production of an ester or an ether, a solvent in the organic chemistry, or the organic molecule may be converted.

The organic molecule may also be used as a fuel, for instance as an additive to gasoline or diesel.

Typical organic molecules to be recovered by the method of the invention include ethers, alcohols, ketons, aldehyds, amines, acids, or a molecule comprising two or more of these functionalities. Particularly preferred organic molecules are alcohols, most preferably butanol, and ketones, preferably aceton.

In the present invention the recovery of butanol from a butanol fermentation results in a selective and high overall recovery of butanol and low energy costs. The method of the invention used for the recovery of butanol from an aqueous medium comprises the steps of (i) adsorbing the butanol from the vapour phase to a zeolite, followed by (ii) thermal desorption and (iii) condensation of concentrated butanol. It was surprisingly found that the zeolite in the process according to the present invention showed a high adsorption capacity of and specificity towards butanol which resulted in the formation of a heteroazeotropic vapor phase that seperates into a pure butanol and a water / butanol phase after condensation.

The butanol is desorbed from the zeolite by thermal desorption. In the desorption step the zeolite is preferably heated to a temperature of at least 93°C, preferably at least 130°C, and below 320°C, preferably below 150°C. It was surprisingly found that at the preferred temperature range the zeolite used in the process according to the present invention was not degraded during repeated thermal desorption of butanol and could be reused in subsequent butanol recovery processes without significant loss of adsorption capacity.

The method of the invention is capable of essentially recovering the entire amount of butanol adsorbed to the zeolite.

According to a preferred embodiment of the invention, a zeolite, in particular a zeolite of the MFI type is used, preferably if the organic molecule is butanol or acetone. Any commercially available (MFI) zeolite may be used.

### EXAMPLES

The following examples are for illustrative purposes only and are not to be construed as limiting the invention.

### Example 1

1.1 Butanol adsorption capacity of the zeolite adsorbent
1000 ml of 1 % (v/v) butanol solution in water was mixed with 100 g of MFI zeolite, that was prepared according US patent no. 7,244,409 B2, Example 6. The solutions comprising butanol and adsorbent were continuously stirred at ambient pressure and room temperature for 1 hour. At time intervals as indicated in table 1, samples (1 ml) were taken from the solution and analyzed for the presence of butanol by GC. GC analyses were carried out using a Thermon Fisher Trace GC Ultra. Butanol was detected with a Thermon Fisher FID. As shown in Table 1, the dissolved butanol was adsorbed rapidly to the adsorbent and a significant decrease in the liquid butanol concentration was observed (Table 1).

**Table 1: Analysis results of liquid butanol concentration in a solution comprising water and zeolite**

| | | | | | | |
|---|---|---|---|---|---|---|
| Time (min) | 0 | 1 | 5 | 10 | 30 | 60 |
| Butanol % (v/v) | 1,02 | 0,03 | 0,01 | 0,02 | 0,01 | 0,00 |

1.2 Butanol adsorption to zeolite from a vapor phase of an aqueous medium
The ability of the afore-mentioned zeolite to adsorb butanol from the overhead vapor phase in a closed system was tested with a 1000 ml butanol solution of 1 % (v/v) butanol in water.
The butanol / water solution was put into a 2 L flask. 100g zeolite were filled into a 2.6 cm ID and 25cm high glass column and the column was connected to the top of the flask with a 7.5mm ID silicone tube. The outlet of the column was connected a 7.5mm ID silicone tube via to a peristaltic pump to an inlet at the bottom of the flask. The pump speed of the peristaltic pump was set to 100ml/min to agitate the butanol / water solution and to move the overhead vapor through the column. The butanol / water solution was treated according the above described procedure at ambient pressure and room temperature for 24 h with the zeolite. At time intervals as indicated in table 2, samples (1 ml) were taken from the butanol solution and analyzed for the presence of butanol by GC as described above.
As shown in table 2, the dissolved butanol was adsorbed continuously to the adsorber and a significant decrease in the liquid butanol concentration was observed over time (Table 2).

**Table 2: Analysis results of adsorption to zeolite from a vapour phase of an aqueous medium**

| | | | | | | | |
|---|---|---|---|---|---|---|---|
| Time (h) | 0 | 1 | 3 | 5 | 7 | 9 | 24 |
| BuOH % (v/v) | 1 | 0,9 | 0,7 | 0,5 | 0,4 | 0,3 | 0 |

1.3 Butanol desorption from zeolite
Butanol adsorbed to the zeolite according to Example 1.2 was desorbed by heating the adsorbent in a 100 ml flask within 15 minutes to 140°C.
The vapor coming off the flask was condensed in a condenser and collected in a 25ml receiving flask. Samples of the upper and lower layer of the distillate were analyzed for the concentration of butanol by GC as described above. GC analyses showed that desorption of butanol from the resin was possible using thermal desorption. An almost complete desorption of 98% of butanol from the zeolite was observed. The overall butanol content in the condensate was 67%.
1.4 Re-use of zeolite for butanol ad- and desorption from an ABE fermentation broth
The ability to reuse zeolite for butanol ad- and desorption was tested according the procedures described in Examples 1.1 - 1.3. Instead of a butanol / water solution, an ABE fermentation broth containing 1.5 % (v/v) butanol was used. The ABE fermentation was essentially carried out according to Monot, F. et. al. 1984, Appl. Microbiology and Biotechnology 19:422-425 using Clostridium acetobutylicum as producing microorganism.
Several adsorption-desorption cycles were performed with the same batch of zeolite and samples of the upper and lower layer of the distillate were analyzed for the concentration of butanol by GC as described above.
GC analyses showed that the average adsorption rate for butanol from the 1.5% ABE fermentation broth was approximately 97%. In average 98% of butanol adsorbed to the zeolite was desorbed and the average overall butanol content in the condensate was 65%.

### Example 2

2.1 Aceton adsorption capacity of the zeolite adsorbent
   1000 ml of 1 % (v/v) aceton solution in water was mixed with 100 g of MFI zeolite, (see above). The solutions comprising aceton and adsorbent were continuously stirred at ambient pressure and room temperature for 1 hour. At time intervals as indicated in table 1, samples (1 ml) were taken from the solution and analyzed for the presence of aceton by GC. GC analyses were carried out using a Thermon Fisher Trace GC Ultra. Aceton was detected with a Thermon Fisher FID. As shown in Table 1, the dissolved aceton was adsorbed rapidly to the adsorbent and a significant decrease in the liquid aceton concentration was observed (Table 1).

**Table 1: Analysis results of liquid aceton concentration in a solution comprising water and zeolite**

| | | | | | | |
|---|---|---|---|---|---|---|
| Min | 0 | 1 | 5 | 10 | 30 | 60 |
| Acetone % (v/v) | 0,99 | 0,03 | 0,01 | 0,00 | 0,01 | 0,00 |

2.2 Aceton adsorption to zeolite from a vapor phase of an aqueous medium

The ability of zeolite (see above), to adsorb aceton from the overhead vapor phase in a closed system was tested with a 1000 ml aceton solution of 1 % (v/v) aceton in water.

The aceton / water solution was put into a 2 L flask. 100g zeolite were filled into a 2.6 cm ID and 25cm high glass column and the column was connected to the top of the flask with a 7.5mm ID silicone tube. The outlet of the column was connected a 7.5mm ID silicone tube via to a peristaltic pump to an inlet at the bottom of the flask. The pump speed of the peristaltic pump was set to 100ml/min to agitate the aceton / water solution and to move the overhead vapour through the column. The aceton / water solution was treated according the above described procedure at ambient pressure and room temperature for 24 h with the zeolite. At time intervals as indicated in table 2, samples (1 ml) were taken from the aceton solution and analyzed for the presence of aceton by GC as described above.

As shown in table 2, the dissolved aceton was adsorbed continuously to the adsorber and a significant decrease in the liquid aceton concentration was observed over time (Table 2).

**Table 2: Analysis results of adsorption to zeolite from a vapor phase of an aqueous medium**

| | | | | | | | |
|---|---|---|---|---|---|---|---|
| Time (h) | 0 | 1 | 3 | 5 | 7 | 9 | 24 |
| BuOH % (v/v) | 1,0 | 0,8 | 0,4 | 0,2 | 0,1 | 0,0 | 0,0 |

2.3 Aceton desorption from zeolite

Aceton adsorbed to the zeolite according to Example 1.2 was desorbed by heating the adsorbent in a 100 ml flask within 15 minutes to 140°C.

The vapor coming off the flask was condensed in a condenser and collected in a 25ml receiving flask. Samples of the upper and lower layer of the distillate were analyzed for the concentration of aceton by GC as described above. GC analyses showed that desorption of aceton from the resin was possible using thermal desorption. An almost complete desorption of approx. 97% of aceton from the zeolite was observed. The overall aceton content in the condensate was approx. 50%.

## Claims

1. A process for the recovery of an organic molecule from the overhead vapor phase of aqueous media by adsorbing onto an adsorbent, wherein no additional thermal energy for said vaporization is provided, and wherein the organic molecule is recovered afterwards by desorbing from the adsorber.

2. A process according to claim 1 wherein the aqueous medium is a fermentation broth.

3. A process according to any of claims 1 -2, wherein the organic molecule is an ether, alcohole, keton, aldehyd, amine, acid, or a molecule comprising two or more of these functionalities.

4. A process according to any of claims 1 - 3, wherein the organic molecule from the vapor phase is adsorbed to an adsorbent which is capable to adsorb 0,1 to less than 5 times, preferably 0,5 to 3,5 times and most preferably 1 to 2 times more of the organic molecules than water under the given process conditions.

5. A process according to any of claims 1 - 4, wherein the organic molecule from the vapor phase is adsorbed at 15-37°C.

6. A process according to any of claims 1 - 5, wherein the adsorbed organic molecule is desorbed by heating the adsorbent, and wherein the organic molecule is condensed by cooling.

7. A process according to any of claims 1 - 6, wherein the organic molecule is butanol or acetone, preferably butanol.

8. A process according to any of claims 1 - 7, wherein the adsorber is a zeolite, silica, bentonite, silicalite, clay, hydrotalcite, aluminiumsilicate, oxide powder, mica, glass, alluminate, clinoptolite, gismondine, quartz, activated carbon, bone carbon, polystyrol, polyurethan, polyacrylamid, polymethacrylate or polyvenylpyridine, preferably is a zeolite, most preferably is a MFI type zeolite.

9. A process according to any one of the claims 1 to 8, further **characterized in that** butanol from the vapor phase is adsorbed to the zeolite.

10. A process according to any of claim 1 to 9 wherein the butanol is desorbed from the adsorbent as a heteroazeotrope with water.

11. A process according to claim 1 to 10 wherein the butanol is recovered from the two layer mixture by a decanter.

12. A process according to any of claims 1 to 11, wherein the organic molecule is acetone and/or butanol and wherein the adsorber is a zeolite, in particular a MFI zeolite.
